(19) Europäisches Patentamt
European Patent Office
Office européen des brevets

(11) Veröffentlichungsnummer: **0 396 971 B1**

(12) # EUROPÄISCHE PATENTSCHRIFT

(45) Veröffentlichungstag der Patentschrift: **08.06.94**

(51) Int. Cl.$^5$: **C08L 83/04**, C08K 5/08

(21) Anmeldenummer: **90107970.7**

(22) Anmeldetag: **26.04.90**

(54) **Stabilisierte Polyorganosiloxane und deren Verwendung als Kraftübertragungsmedium.**

(30) Priorität: **09.05.89 DE 3915066**

(43) Veröffentlichungstag der Anmeldung:
**14.11.90 Patentblatt 90/46**

(45) Bekanntmachung des Hinweises auf die Patenterteilung:
**08.06.94 Patentblatt 94/23**

(84) Benannte Vertragsstaaten:
**AT DE ES FR GB IT SE**

(56) Entgegenhaltungen:
**EP-A- 0 244 617**
**EP-A- 0 249 960**
**GB-A- 780 622**

(73) Patentinhaber: **BAYER AG**

**D-51368 Leverkusen(DE)**

(72) Erfinder: **Marquardt, Gerwig, Dr.**
**Schlehdornweg 15**
**d-5068 Odenthal(DE)**
Erfinder: **Preiss, Peter, Dipl.-Ing.**
**Gellertweg 22**
**D-5600 Wuppertal 1(DE)**

EP 0 396 971 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft stabilisierte Polyorganosiloxane mit verbesserter Oxidations- und Wärmebeständigkeit, die z. B. in elektrischen Vorrichtungen, hydraulischen Systemen, Wärmeübertragungsanlagen, Visko-und Lüfterkupplungen oder Drehmomentwandlern als Kraftübertragungsmedium eingesetzt werden können.

Besondere Bedeutung hat die vorliegende Erfindung für "gekapselte Systeme", wie beispielsweise für Viskokupplungen, in denen Polyorganosiloxane in ihrer Funktion als Kraftübertragungsmedien verwendet werden und hierbei hohen Scherkräften ausgesetzt sind.

Bei dieser Belastungsart kommt es aufgrund von Reibungs-vorgängen zu einer sehr starken Erhitzung der eingesetzten Medien (in Gegenwart geringer Mengen Luftsauerstoff), wobei nicht stabilisierte Polyorganosiloxane bereits nach kurzer Zeit ihr Eigenschaftsbild merklich verändern. In der Patentliteratur findet man eine Vielzahl von Stabilisierungsverfahren für Polyorganosiloxane, die jedoch meist den Nachteil besitzen, nur gegenüber einer Belastungsart geeignet zu sein. Entweder lassen sich mit den beschriebenen Verfahren nur stabilisierende Effekte bei oxidativer Wärmebelastung feststellen oder es wird lediglich eine Stabilisierung gegenüber rein thermischen Abbauprozessen erzielt.

Als wirksame Zusätze gegenüber oxidativen Einflüssen sind z.B. Metallverbindungen organischer Säuren (US-PS 2 445 567), Metallchelate (US-PS 2 465 296), Ferrocen (DE-AS 1 116 396), Cer(III)-diorganosiloxanolate (DE-PS 2 362 954) und $SiO_2$/Carbonsäurederivate (GB-A-1 409 476) vorgeschlagen worden, während zur reinen Wärmestabilisierung Organotitan-, Organozirkon- und/oder Organohafniumverbindungen in Kombination mit Organosiliciumhydriden (DE-OS 2 817 841) geeignet sein sollen, Speziell im Hinblick auf den Einsatz der Polyorganosiloxane in Viskokupplungen sind Stabilisierungsverfahren beschrieben worden, die eine Nachbehandlung der Systeme mit OH-aktiven Siliciumverbindungen (EP 0 249 960), Zusätze von Titan-, Zirkon- und Hafniumkomponenten in Kombination mit anilinophenoxy- bzw. naphthylaminophenoxymodifizierten Organosiloxanen (DE-OS 3 813 660) sowie von Schwefelverbindungen (DE-OS 3 818 364) zum Inhalt haben,

Darüber hinaus ist bekannt, daß auch spezielle Ketonverbindungen, wie u.a. substituierte Anthrachinone, eine stabilisierende Wirkung auf Polyorganosiloxane in elektrischen Vorrichtungen (GB-A-780 622) zeigen.

Aufgabe der Erfindung war es, Polyorganosiloxane so zu stabilisieren, daß sich ihre Viskosität sowohl bei oxidativer Wärmebelastung als auch bei depolymerisierenden Bedingungen möglichst wenig ändert. Diese Aufgabe wurde dadurch gelöst, daß den Polyorganosiloxanen eine Kombination, bestehend aus einer 0,001 bis 0,05 Gew.-% betragenden Menge substituierter Anthrachinonverbindungen (= Komponente A), insbesondere solche der Formel

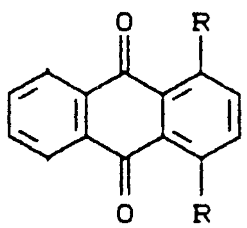

worin

R Wasserstoffreste, Aminogruppen oder substituierte Aminogruppen, wie z.B. Alkylamino-, Alkenylamino-oder Arylaminoreste sein können

und einer 0,05-5 Gew.-% betragenden Menge eines trimethylsilylendgestoppten Polymethylhydrogensiloxans mit einer kinematischen Viskosität von 4 bis 50 $mm^2\ s^{-1}$ (= Komponente B) eingearbeitet wurde, Verwendet man lediglich nur eine Komponente, so sind die beobachteten stabilisierenden Effekte nur schwach, bzw. gar nicht ausgeprägt. Bevorzugt wird die Anthrachinonverbindung in Mengen von 0,005 - 0,03 Gew.-% und das Polymethylhydrogensiloxan in Mengen von 0,1 - 0,5 Gew.-% eingesetzt.

Gegenstand der vorliegenden Erfindung sind also Polyorganosiloxane mit verbesserter Oxidations- und Wärmebeständigkeit. die dadurch gekennzeichnet sind, daß sie einen Gehalt von 0,001 bis 0,05 Gew.-%, bezogen auf die Gesamtmenge, an Anthrachinonverbindungen der allgemeinen Formel

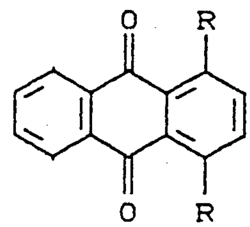

worin

R unabhängig voneinander für Wasserstoff, Aminogruppen, substituierten Aminogruppen stehen kann und einen Gehalt von 0,05 - 5 Gew.-% an trimethylsilylendgestoppten Polymethylhydrogensiloxanan mit einer kinematischen Viskosität von 4 bis 50 $mm^2/s^{-1}$, aufweisen.

Anthrachinonverbindungen finden hauptsächlich als Farbstoffe Verwendung, während Polymethylhydrogensiloxane in erster Linie als Hydrophobiermittel für die verschiedensten Materialien (Textil, Gips, Pigmente, Feuerlöschpulver) im Einsatz sind.

Als Polyorganosiloxane kommen bevorzugt lineare oder gegebenenfalls auch verzweigte Polydimethylsiloxane mit einer Viskosität von 50 bis 1.000.000 $mm^2\ s^{-1}$ bei 25 °C zur Anwendung. Ebenfalls lassen sich auch Polyorganosiloxane mit Organogruppen wie Ethyl, Vinyl, Propyl, Butyl, Phenyl oder ähnlichen Substituenten verwenden.

Polyorganosiloxane, bevorzugt Polydimethylsiloxane, werden in großem Umfang nach den üblichen Verfahren hergestellt und vertrieben. Sie sind z.B. als Elektroisolierflüssigkeiten, Hydraulikmedien, Hydrophobiermittel, Dämpfungsflüssigkeiten, Entschäumer, Schmiermittel oder Wärmeübertragungsmedien im Einsatz.

Zur Bewertung der Oxidationsbeständigkeit von Polyorganosiloxanen bietet sich die Bestimmung der Gelzeit an. Man versteht hierunter die Zeit, die erforderlich ist, eine Probe bei einer bestimmten Temperatur in Luft so lange zu tempern, bis sie durch oxidative Vorgänge so weit verändert worden ist, daß sie unter dem Einfluß der Schwerkraft nicht mehr fließt.

Als Maß für die thermische Beständigkeit kann die Viskositätsänderung dieser Systeme nach einer bestimmten Temperatur-/Zeitbelastung in einem geschlossenen, luftfreien System herangezogen werden.

Die nachstehend aufgeführten Beispiele sollen nun die Wirksamkeit der erfindungsgemäßen Kombination in Polyorganosiloxanen verdeutlichen.

Beispiel 1 (Vergleich)

In einem trimethylsilylendgestoppten Polydimethylsiloxan (PDMS) mit einer Viskosität von 50 $mm^2\ s^{-1}$ bei 25 °C wurden jeweils 0,01 Gew.-% der folgenden Anthrachinonverbindungen eingerührt (Tabelle 1).

Tabelle 1: Verwendete Anthrachinonverbindungen

| | |
|---|---|
| Nr. 1 | Anthrachinon |
| Nr. 2 | 1-Aminoanthrachinon |
| Nr. 3 | 1,4-Diamino-anthrachinon |
| Nr. 4 | 1,4-Bis-isobutylamino-anthrachinon |
| Nr. 5 | 1,4-Bis-3-methyl-1-(2-phenyl-ethyl)-butyl-amino-anthrachinon * |
| Nr. 6 | 1,4-Bis-methylamino-anthrachinon * |
| Nr. 7 | 1,4-Bis-(2-hydroxyethylamino)-anthrachinon * |
| Nr. 8 | 1-(3-Dimethylaminopropylamino)-4-methylamino-anthrachinon |
| Nr. 9 | 1-Amino-4-methylamino-anthrachinon * |
| Nr. 10 | 1-(4-Methyl-phenylamino)-anthrachinon |
| Nr. 11 | 1,4-Bis-(4-methyl-phenylamino)-anthrachinon * |
| Nr. 12 | 1,4-Bis-(2,6-diethyl-4-methyl-phenyl-amino)-anthrachinon |
| Nr. 13 | 1,4-Bis-(4-tert.-butyl-phenyl-amino)-anthrachinon |
| Nr. 14 | 1,4-Bis-(4-cyclohexyl-phenyl-amino)-anthrachinon * |
| Nr. 15 | 1-Amino-4-phenylamino-anthrachinon * |
| Nr. 16 | 1-Amino-4-cyclohexylamino-anthrachinon * |
| Nr. 17 | 1-Methylamino-4-(3-methyl-phenylamino)-anthrachinon |
| Nr. 18 | 1-Methylamino-4-(4-methyl-phenylamino)-anthrachinon |
| Nr. 19 | 1-(4-Amino-phenylamino)-1-methylamino-anthrachinon * |
| Nr. 20 | 1-(4-Methoxy-phenylamino)-4-methylamino)-anthrachinon * |
| Nr. 21 | 1-(3-dimethylaminopropylamino-4-(4-methyl-phenylamino)-anthrachinon |

* Verbindung war nur teilweise löslich.

Da eine völlige Löslichkeit einzelner Verbindungen in dem verwendeten Siliconöl nicht in allen Fällen gegeben war, wurden die betreffenden Proben vom unlöslichen Anteil abdekantiert und dann als gesättigte Lösungen zusammen mit den Proben der löslichen Verbindungen, deren Löslichkeitsgrenzen alle im Bereich von etwa 0,02 - 0,05 Gew.-% lagen, auf ihre Oxidationsbeständigkeit untersucht. Die Prüfung erfolgte in 50 ml-Bechergläsern, in denen jeweils 20 g der betreffenden Proben bei 225 °C so lange getempert wurden, bis Vergelung eintrat. In Tabelle 2 sind die ermittelten Gelzeiten aufgeführt.

Tabelle 2

| Gelzeiten von Polydimethylsiloxanölen (PDMS) mit Zusätzen verschiedener Anthrachinonverbindungen | |
|---|---|
| mit Zusatz | Gelzeit (Tage) |
| Nr. 1 | 8 - 12 |
| Nr. 2 | 8 - 12 |
| Nr. 3 | 12 - 16 |
| Nr. 4 | 20 - 24 |
| Nr. 5 | 12 - 16 |
| Nr. 6 | 20 - 24 |
| Nr. 7 | 16 - 20 |
| Nr. 8 | 20 - 24 |
| Nr. 9 | 24 - 28 |
| Nr. 10 | 12 - 16 |
| Nr. 11 | 40 - 48 |
| Nr. 12 | 8 - 12 |
| Nr. 13 | 40 - 48 |
| Nr. 14 | 36 - 40 |
| Nr. 15 | 32 - 36 |
| Nr. 16 | 24 - 28 |
| Nr. 17 | 40 - 48 |
| Nr. 18 | 40 - 48 |
| Nr. 19 | 32 - 36 |
| Nr. 20 | 32 - 36 |
| Nr. 21 | 32 - 36 |
| PDMS ohne Zusatz | 8 - 12 |

Beispiel 2 (Vergleich)

In dem in Beispiel 1 genannten Polydimethylsiloxan wurde 0,1 Gew.-% einer trimethylsilylendgestoppten Polymethylhydrogensiloxanverbindung mit einer Viskosität von 30 $mm^2$ $s^{-1}$ bei 25 °C eingerührt und seine Oxidationsbeständigkeit im Vergleich zur undotierten Ware geprüft. Die Untersuchung erfolgte in Analogie zum Beispiel 1 in 50 ml-Bechergläsern bei 225 °C bis zur Erreichung des Gelzustandes. Hierbei konnte für die dotierte Ware eine Gelzeit von 8 - 12 Tagen ermittelt werden, also die gleiche Zeitdauer wie für die undotierte Ware.

Beispiel 3 (Vergleich)

In trimethylsilylendgestoppten Polydimethylsiloxanen unterschiedlicher Viskositäten wurden jeweils 0,2 Gew.-% einer ebenfalls trimethylsilylendgestoppten Polymethylhydrogensiloxanverbindung mit einer Viskosität von 15 $mm^2$ $s^{-1}$ bei 25 °C eingerührt und die Gelzeiten in Analogie zum Beispiel 1 im Vergleich mit den undotierten Proben ermittelt, Die Ergebnisse sind in Tabelle 3 zusammengefaßt.

Tabelle 3

| Gelzeiten von Polydimethylsiloxanen unter-schiedlicher Viskositäten mit Zusätzen von Polymethylhydrogensiloxan | | |
|---|---|---|
| Viskosität in $mm^2\ s^{-1}$ bei 25 °C | Gelzeit ohne Zusatz in Tagen | Gelzeit mit Zusatz in Tagen |
| 50 | 8 - 12 | 8 - 12 |
| 500 | 5 - 6 | 5 - 6 |
| 1.000 | 5 - 6 | 5 - 6 |
| 5.000 | 5 - 6 | 4 - 5 |
| 60.000 | 4 - 5 | 4 - 5 |
| 500.000 | 3 - 4 | 3 - 4 |

Beispiel 4 (Vergleich)

In den trimethylsilylendgestoppten Polydimethylsiloxanen gemäß Beispiel 3 wurden jeweils 0,01 Gew.-% 1-Methylamino-4-(3-methyl-phenylamino)-anthrachinon gelöst und die Gelzeiten in Analogie zu der in Beispiel 1 beschriebenen Methode im Vergleich mit den undotierten Proben ermittelt. Die Ergebnisse sind in Tabelle 4 zusammengefaßt.

Tabelle 4

| Gelzeiten von Polydimethylsiloxanen unterschiedlicher Viskositäten mit Zusätzen von 1-Methylamino-4-(3-methyl-phenylamino)-anthrachinon | | |
|---|---|---|
| Viskosität in $mm^2\ s^{-1}$ bei 25 °C | Gelzeit ohne Zusatz in Tagen | Gelzeit mit Zusatz in Tagen |
| 50 | 8 - 12 | 40 - 48 |
| 500 | 5 - 6 | 20 - 22 |
| 1.000 | 5 - 6 | 20 - 22 |
| 5.000 | 5 - 6 | 18 - 20 |
| 60.000 | 4 - 5 | 18 - 20 |
| 500.000 | 3 - 4 | 16 - 18 |

Beispiel 5

In den trimethylsilylendgestoppten Polydimethylsiloxanen gemäß Beispiel 4 wurden jeweils 0,01 Gew.-% 1-Methylamino-4-(3-methyl-phenylamino)-anthrachinon und 0,2 Gew.-% einer trimethylsilylendgestoppten Polymethylhydrogensiloxanverbindung mit einer Viskosität von 15 $mm^2\ s^{-1}$ bei 25 °C gelöst und die Gelzeiten in Analogie zu der in Beispiel 1 beschriebenen Methode im Vergleich mit den undotierten Proben ermittelt. Die Ergebnisse sind in Tabelle 5 zusammengefaßt.

Tabelle 5

| Gelzeiten von Polydimethylsiloxanen unterschiedlicher Viskositäten mit Zusätzen von 1-Methylamino-4-(3-methyl-phenylamino)-anthrachinon und Polymethylhydrogensiloxan | | |
|---|---|---|
| Viskosität in $mm^2\ s^{-1}$ bei 25 °C | Gelzeit ohne Zusatz in Tagen | Gelzeit mit Zusatz in Tagen |
| 50 | 8 - 12 | 55 - 60 |
| 500 | 5 - 6 | 44 - 48 |
| 1.000 | 5 - 6 | 44 - 48 |
| 5.000 | 5 - 6 | 40 - 44 |
| 60.000 | 4 - 5 | 40 - 44 |
| 500.000 | 3 - 4 | 40 - 44 |

Beispiel 6

In den trimethylsilylendgestoppten Polydimethylsiloxanen mit einer Viskosität von 60.000 $mm^2\ s^{-1}$ bei 25 °C wurden jeweils 0,01 Gew.-% der Anthrachinonverbindungen Nr. 4, 8, 13 und 18 aus Beispiel 1 gelöst und hinsichtlich Oxidationsbeständigkeit gemäß Methode aus Beispiel 1 verglichen mit Proben des Polydimethylsiloxans der gleichen Viskosität, welches außer den betreffenden Anthrachinonverbindungen zusätzlich noch 0,2 Gew.-% eines trimethylsilylendgestoppten Polymethylhydrogensiloxans einer Viskosität von 15 $mm^2\ s^{-1}$ bei 25 °C enthielt. Die Ergebnisse sind in Tabelle 5 zusammengefaßt.

Tabelle 6

| Gelzeiten von Polydimethylsiloxans mit verschiedenen Anthrachinonverbindungen im Vergleich zu Proben, die zusätzlich noch ein Polymethylhydrogensiloxan beinhalten. | |
|---|---|
| Mit Anthrachinonzusatz | Gelzeit (Tage) |
| Nr. 4 | 10 - 12 |
| Nr. 8 | 10 - 12 |
| Nr.13 | 18 - 20 |
| Nr.18 | 18 - 20 |
| Mit Anthrachinonzusatz und Polymethylhydrogensiloxan | |
| Nr. 4 | 20 - 24 |
| Nr. 8 | 22 - 26 |
| Nr.13 | 40 - 44 |
| Nr.18 | 40 - 44 |

Beispiel 7

Zur Feststellung, ob die erfindungsgemäße Wirkstoffkombination aus Anthrachinonverbindung und Polymethylhydrogensiloxan auch auf andere Systeme als Polydimethylsiloxane stabilisierend wirkt, wurden jeweils 0,02 Gew.-% 1-Methylamino-4-(3-methyl-phenylamino)-anthrachinon und 0,2 Gew.-% eines trimethylsilylendgestoppten Polymethylhydrogensiloxans in den in Tabelle 7 aufgeführten Polyorganosiloxanen gelöst und dann 20 g dieser Proben in 50 ml-Bechergläsern bei 225 °C im Vergleich mit Proben, die nur die Anthrachinonverbindung enthielten sowie mit undotierter Ware bis zur Vergelung getempert.

Tabelle 7

| Verwendete Polyorganosiloxane | |
|---|---|
| Öl Nr. 1: | trimethylsilylendgestopptes Polydimethylsiloxan einer Viskosität von 100 $mm^2$ $s^{-1}$ bei 25 °C |
| Öl Nr. 2: | trimethylsilylendgestopptes Polymethylethylsiloxan einer Viskosität von 50 $mm^2$ $s^{-1}$ bei 25 °C |
| Öl Nr. 3: | trimethylsilylendgestopptes Polymethylphenylsiloxan einer Viskosität von 200 $mm^2$ $s^{-1}$ bei 25 °C |

In Tabelle 8 sind die hierbei erhaltenen Ergebnisse zusammengefaßt.

Tabelle 8

| Gelzeiten verschiedener Polyorganosiloxane mit 0,02 Gew.-% 1-Methylamino-4-(3-methylphenylamino)-anthrachinon, mit 0,02 Gew.-% derselben Verbindung plus 0,2 Gew.-% Polymethylhydrogensiloxan einer Viskosität von 15 $mm^2$ $s^{-1}$ bei 25 °C im Vergleich mit undotierter Ware | | |
|---|---|---|
| | | Gelzeit (Tage) |
| Öl Nr. 1 | undotiert (Vergleich) | 8 - 10 |
| Öl Nr. 1 | mit Anthrachinonverb.(Vergleich) | 38 - 42 |
| Öl Nr. 1 | mit Anthrachinonverb. und Polymethylhydrogensiloxan | 52 - 56 |
| Öl Nr` 2 | undotiert (Vergleich) | 2 - 3 |
| Öl Nr. 2 | mit Anthrachinonverb. (Vergleich) | 3 - 4 |
| Öl Nr. 2 | mit Anthrachinonverb. und Polymethylhydrogensiloxan | 6 - 8 |
| Öl Nr. 3 | undotiert (Vergleich) | 6 - 8 |
| Öl Nr. 3 | mit Anthrachinonverb. (Vergleich) | 10 - 12 |
| Öl Nr. 3 | mit Anthrachinonverb. und Polymethylhydrogensiloxan | 14 - 16 |

Die Prüfung der Polymethylphenylsiloxane wurde aufgrund der verbesserten Wärmebeständigkeit dieser Stoffklasse bei 300 °C durchgeführt.

## Beispiel 8

Zur Überprüfung, ob die erfindungsgemäße Kombination auch eine stabilisierende Wirkung gegenüber thermischer Depolymerisation von Polyorganosiloxanen entfaltet, wurden jeweils trimethylsilylendgestoppte Polydimethylsiloxane unterschiedlicher Viskositäten dotiert mit 0,01 Gew.-% 1-Methylamino-4-(3-methyl-phenylamino)-anthrachinon (Proben A), mit 0,2 Gew.-% einer trimethylsilylendgestoppten Polymethylhydrogensiloxanverbindung einer Viskosität von 15 $mm^2$ $s^{-1}$ bei 25 °C (Proben B) mit 0,01 Gew.-% 1-Methylamino-4-(3-methyl-phenylamino)-anthrachinon und 0,2 Gew.-% einer trimethylsilylendgestoppten Polymethylhydrogensiloxanverbindung einer Viskosität von 15 $mm^2$ $s^{-1}$ bei 25 °C (Proben C) und verglichen mit den undotierten Waren (Proben D).

Von den einzelnen Proben wurden jeweils 30 g in Borosilicatröhrchen einer Länge von 250 mm und einem Durchmesser von 20 mm mit Schliffaufsatz eingefüllt. Anschließend erfolgte ein mehrmaliges Entgasen der Proben unter Zuhilfenahme eines Dreiwegehahns im Vakuum und Überschichten mit getrocknetem Stickstoff. Die so vorbehandelten Proberöhrchen wurden dann in geschlossener Dreiwegehahnstellung in einem Heizblock 14 Tage lang bei 225 °C getempert und anschließend die Viskositätsänderung im Vergleich zu den ungetemperten Proben in Prozent ermittelt. Die Ergebnisse dieser Untersuchung sind in Tabelle 9 zusammengefaßt.

Tabelle 9

| Viskositätsänderungen verschiedener dotierter und undotierter Polydimethylsiloxane nach 14tägiger Temperung bei 225 °C im geschlossenen, stickstoffüberlagerten System | | |
|---|---|---|
| | Ausgangsviskosität in $mm^2 s^{-1}$ bei 25 °C | Viskositätsänderung nach Lagerung in % |
| Proben A (Vergleich) | 1.000<br>5.000<br>60.000<br>500.000 | - 25<br>- 42<br>- 75<br>- 83 |
| Proben B (Vergleich) | 1.000<br>5.000<br>60.000<br>500.000 | - 18<br>- 43<br>- 66<br>- 84 |
| Proben C | 1.000<br>5.000<br>60.000<br>500.000 | - 8<br>- 24<br>- 49<br>- 52 |
| Proben D (Vergleich) | 1.000<br>5.000<br>60.000<br>500.000 | - 20<br>- 42<br>- 75<br>- 89 |

Sowohl die Oxidations- als auch die Wärmebeständigkeit von Polyorganosiloxanen, insbesondere von Polydimethylsiloxanen, läßt sich also durch die Zugabe der erfindungsgemäßen Kombination aus Anthrachinonverbindungen und Methylhydrogensiloxanen deutlich verbessern gegenüber Systemem, die nur eine der genannten Substanzklassen enthalten, bzw. keine Zusätze beinhalten.

**Patentansprüche**

1. Polyorganosiloxane mit verbesserter Oxidations- und Wärmebeständigkeit, gekennzeichnet durch einen Gehalt - bezogen auf die Gesamtmenge - von 0,001 bis 0,05 Gew.-% Anthrachinonverbindungen und 0,05 bis 5 Gew.-% eines trimethylsilylendgestoppten Polymethylhydrogensiloxans mit einer kinematischen Viskosität von 4 bis 50 $mm^2 s^{-1}$ bei 25 °C.

2. Verwendung von Polyorganosiloxanen nach Anspruch 1 als Kraftübertragungsmedium`

**Claims**

1. Polyorganosiloxanes having improved resistance to oxidation and heat, characterized by a content - based on the total quantity - of 0.001 to 0.05% by weight of anthraquinone compounds and 0.05 to 5% by weight of a trimethylsilyl-terminated polymethyl hydrogen siloxane having a kinematic viscosity of 4 to 50 $mm^2 s^{-1}$ at 25 °C.

2. The use of the polyorganosiloxanes claimed in claim 1 as a power transmission medium.

**Revendications**

1. Polyorganosiloxanes à stabilité améliorée à l'oxydation et à la chaleur, caractérisés en ce qu'ils contiennent, sur le poids total, de 0,001 à 0,05 % en poids d'un dérivé de l'anthraquinone et de 0,05 à 5% en poids d'un polyméthylhydrogénosiloxane à groupes terminaux triméthylsilyle ayant une viscosité cinématique de 4 à 50 $mm^2.s^{-1}$ à 25 °C.

2. Utilisation des Polyorganosiloxanes selon la revendication 1 en tant que fluides de transfert d'énergie.